**Europäisches Patentamt**

**European Patent Office**

**Office européen des brevets**

(19)

(11) Numéro de publication : **0 348 311 B1**

(12) **FASCICULE DE BREVET EUROPEEN**

(45) Date de publication du fascicule du brevet :
**02.12.92 Bulletin 92/49**

(51) Int. Cl.⁵ : **B65G 47/91,** B25J 15/06,
B65H 3/08, C14B 17/06

(21) Numéro de dépôt : **89420211.8**

(22) Date de dépôt : **13.06.89**

(54) **Dispositif pour la préhension de pièces souples isolées ou adjacentes, leur manipulation et leur dépose, notamment de pièces en cuir et similaires.**

(30) Priorité : **24.06.88 FR 8809038**

(43) Date de publication de la demande :
**27.12.89 Bulletin 89/52**

(45) Mention de la délivrance du brevet :
**02.12.92 Bulletin 92/49**

(84) Etats contractants désignés :
**AT BE CH DE ES GB GR IT LI LU NL SE**

(56) Documents cités :
**FR-A- 2 391 308
FR-A- 2 604 984
US-A- 3 991 997
US-A- 4 362 461
US-A- 4 674 785
US-A- 4 712 784**

(73) Titulaire : **CENTRE TECHNIQUE CUIR
CHAUSSURE MAROQUINERIE
4 rue Hermann Frenkel
F-69007 Lyon (FR)**

(72) Inventeur : **Pousset, Michel
46 rue du Commandant Charcot
F-69005 Lyon (FR)**
Inventeur : **Darragon, Jérôme
rue Lamartine St André Le Gaz
F-38490 Les Abrets (FR)**

(74) Mandataire : **Bratel, Gérard et al
Cabinet GERMAIN & MAUREAU B.P. 3011
F-69392 Lyon Cédex 03 (FR)**

EP 0 348 311 B1

Jouve, 18, rue Saint-Denis, 75001 PARIS

**Description**

La présente invention concerne un dispositif pour la préhension de pièces souples isolées ou adjacentes, leur manipulation et leur dépose, notamment de pièces en cuir et similaires, comprenant un préhenseur équipé d'une multiplicité de ventouses réparties dans un plan et supportées par une structure, les ventouses étant aptes à être reliées individuellement à une source de vide ou de dépression, et des moyens du genre vanne étant prévus pour contrôler séparément l'activation de chaque ventouse en la mettant en communication individuellement avec une source de vide ou de dépression, de telle manière qu'une sélection des ventouses activées puisse être effectuée en fonction du contour particulier de chaque pièce à prélever. Ce dispositif s'applique notamment au prélèvement, à la manipulation à plat et à la dépose de pièces en cuir et similaires de faible épaisseur, et de formes et dimensions variables, dans l'industrie de la chaussure et dans les industries voisines telles que la maroquinerie, les pièces à prélever pouvant être initialement isolées ou adjacentes.

Traditionnellement, dans l'industrie de la chaussure et dans les autres industries analogues où des pièces souples en cuir ou similaires doivent être manipulées, les opérations de ramassage et de triage des pièces après découpe, ou après toute autre opération de transformation ou de traitement, sont effectuées manuellement par les opérateurs eux-mêmes. Les pièces sont ainsi regroupées, dans l'attente de l'opération suivante, en paquets de dix ou vingt unités, cerclés par un lien élastique qu'il convient de défaire avant de commencer l'opération suivante.

Ce mode opératoire manuel s'adapte mal à une automatisation de la production, et il fait fi de la multitude d'informations qui peuvent être actuellement fournies par l'utilisation des techniques modernes telles que : conception assistée par ordinateur, gestion de production assistée par ordinateur, reconnaissance de formes automatique , robotique et autres techniques faisant appel à l'informatique.

Toutefois, la manipulation automatique de pièces souples dans l'industrie de la chaussure pose des problèmes spécifiques. La souplesse et la légèreté des pièces, inhérente à leur matière et à leur faible épaisseur, rend déjà la manipulation unitaire de ces pièces particulièrement délicate. La grande variété de formes et dimensions des pièces complique encore les problèmes rencontrés. De plus, dans le cas de la préhension de pièces résultant d'une précédente opération de découpe, il convient de pouvoir prélever ces pièces une à une, donc de pouvoir saisir une pièce déterminée sans déplacer les pièces adjacentes.

Une tentative de solution à ce problème est indiquée par le document FR-A-2391308 (voir en particulier figures 12 et 13). Ce document montre un dispositif pour la préhension, le transfert et la dépose de pièces flexibles planes, en particulier de pièces en cuir, comprenant une multiplicité de chambres partielles réparties dans un plan au-dessus d'une paroi perforée et à l'intérieur d'une structure du genre "caisson". Chaque chambre partielle, assimilable à une ventouse, est apte à être reliée individuellement avec une source de vide ou de dépression, de telle manière qu'une sélection des chambres partielles activées puisse être effectuée en fonction du contour particulier de chaque pièce à prélever. A cet effet, chaque chambre partielle communique avec le caisson, relié lui-même à la source de vide ou de dépression, par un clapet individuel qui est directement commandé par un palpeur en forme de tige, venant en contact physique avec la pièce en cuir à saisir.

Ce dispositif ne répond que de façon très imparfaite aux problèmes posés :
- Les palpeurs mécaniques sont déjà mal adaptés à la détection de pièces de faible épaisseur, posées sur un support.
- Ces palpeurs peuvent détériorer des pièces en cuir fragiles.
- Toutes les chambres partielles ou ventouses situées en regard d'une pièce à prélever sont nécessairement activées de façon simultanée, ce qui conduit à une consommation d'énergie élevée et dans certains cas inutile.
- Surtout, dans le cas de plusieurs pièces adjacentes, toutes les ventouses situées en regard de ces pièces sont activées simultanément ; ainsi, le dispositif ne peut opérer aucun discernement entre des pièces adjacentes, pour les prélever séparément et non pas simultanément, notamment afin de les diriger individuellement vers des points distincts et effectuer ainsi un triage, en fonction des caractéristiques particulières de ces pièces.

La présente invention évite toutes les difficultés précédentes, en apportant une solution adéquate sous la forme d'un dispositif dont le fonctionnement ne nécessite aucun contact physique avec les pièces à prélever et permet une activation plus sélective des ventouses, en permettant notamment le prélèvement d'une seule pièce bien déterminée parmi plusieurs pièces adjacentes, sans déplacer les autres pièces, pour l'automatisation des opérations de triage.

A cet effet, dans le dispositif objet de l'invention pour la préhension de pièces souples isolées ou adjacentes, leur manipulation et leur dépose, qui appartient au genre indiqué en introduction et connu par le document précité FR-A-2391308, il est prévu qu'à chaque ventouse est associée, en tant que moyen de contrôle de son activation, une électrovanne qui est propre à cette ventouse et qui est commandée par une partie électronique, et à l'aide d'un logiciel, à partir d'informations mémorisées ou directement transmises relatives à la forme et/ou à d'autres caractéristiques, telles que position, orientation, poids, rigidité, de chaque pièce à prélever, sans nécessité de contact physique avec cette pièce.

Les ventouses sont notamment supportées par la face inférieure d'un caisson rigide et étanche, porté par un bras manipulateur ou autre robot auquel il est lié par un raccord mécanique approprié ; l'intérieur du caisson est relié, par une tuyauterie pneumatique unique, à une source de vide ou de dépression extérieure. La partie inférieure, plane, de ce caisson est équipée d'un grand nombre de ventouses disposées côte à côte, selon une répartition géométrique simple, telle que notamment une répartition suivant un quadrillage régulier, formant une "matrice" rectangulaire de ventouses. Chaque électrovanne, associée à une ventouse, est de préférence une électrovanne miniaturisée prévue pour mettre cette ventouse en communication individuellement avec le vide ou la dépression régnant dans le caisson. L'ensemble des électrovannes affectées aux ventouses, avec les parties pneumatiques et les éléments électromagnétiques de ces électrovannes, est avantageusement logé dans le caisson, directement au-dessus de ces ventouses. De préférence, les circuits électroniques de commande et ou de contrôle, qui permettent d'activer chaque électrovanne de façon individuelle, sont eux aussi logés à l'intérieur du caisson. Ces circuits électroniques sont raccordés d'une part aux électrovannes, par l'intermédiaire de connecteurs individuels, et d'autre part, par l'intermédiaire d'un câble multiconducteurs, à une unité de contrôle extérieure telle qu'un ordinateur, fournissant les ordres nécessaires, la commande d'activation des électrovannes étant multiplexée.

Le bras manipulateur, ou autre robot, permet de déplacer le préhenseur dont les ventouses, reliées à la source de vide ou de dépression, retiennent une pièce souple à manipuler. La sélection des ventouses activées est faite en fonction de la forme et de la dimension de la pièce ; il peut être prévu d'activer la totalité des ventouses situées sur l'étendue de la pièce à prélever, ou seulement les ventouses voisines du contour de cette pièce, et situées à l'intérieur de ce contour, l'adaptation aux caractéristiques géométriques de chaque pièce pouvant être d'autant plus précise que les ventouses sont plus nombreuses et plus proches les unes des autres. Pour la préhension d'une pièce, on commande l'ouverture de toutes les électrovannes qui correspondent aux ventouses devant participer à la préhension de la pièce, les autres électrovannes étant maintenues fermées, ce qui permet de prélever la pièce considérée sans déplacer d'éventuelles pièces adjacentes. Après transfert d'une pièce vers le lieu de dépose, on commande la désactivation des ventouses précédemment mises en action, pour lâcher la pièce. La dépose peut être améliorée si le préhenseur est en outre prévu pour effectuer à ce moment un soufflage d'air au travers des ventouses, assurant une chute à plat de la pièce lâchée, qui tombe par exemple sur une pile formée par d'autres pièces précédemment déposées de la même manière.

De toute façon, l'invention sera mieux comprise, et d'autres caractéristiques seront mises en évidence, à l'aide de la description qui suit, en référence au dessin schématique annexé représentant, à titre d'exemple non limitatif, une forme d'exécution de ce dispositif pour la préhension, la manipulation et la dépose de pièces souples, et illustrant des applications de ce dispositif dans le cas de pièces en cuir :

Figure 1 est une vue d'ensemble, en perspective, d'un préhenseur appartenant à un dispositif conforme à la présente invention ;

Figure 2 est une vue partielle en coupe du préhenseur de figure 1, avec indication de deux ventouses et des électrovannes associés, l'une en position ouverte et l'autre en position fermée ;

Figure 3 est une vue en plan très schématique du préhenseur, illustrant le mode de sélection des ventouses activées en fonction du contour d'une pièce à prélever ;

Figure 4 est une vue en perspective d'une installation de triage et d'empilage de pièces en cuir comportant application du dispositif selon l'invention ;

Figure 5 est une vue en perspective d'une installation de découpe automatique de pièces en cuir, comportant également application du dispositif objet de l'invention.

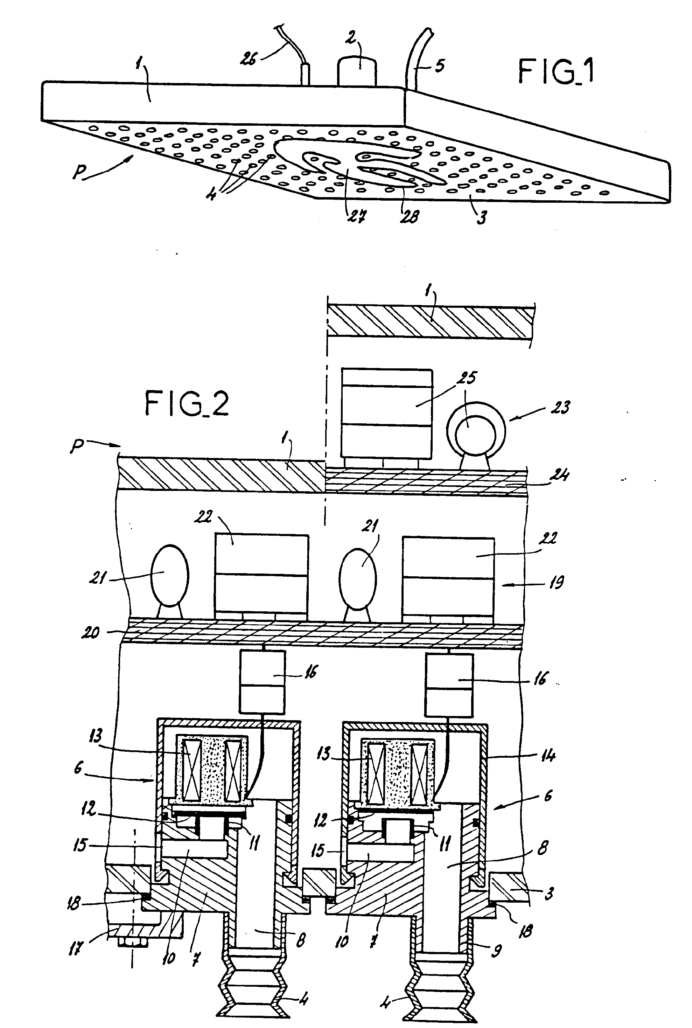

Le préhenseur P représenté dans son ensemble sur la figure 1 comprend un caisson 1 rigide et étanche, de forme générale parallélépipédique, pourvu à sa partie supérieure et en son centre d'un raccord mécanique 2 pour sa liaison avec un bras manipulateur ou autre robot, non représenté sur cette figure. La face inférieure 3 du caisson 1 est équipée d'un grand nombre de ventouses 4, disposées en quadrillage suivant des lignes longitudinales et des rangées transversales, de manière à couvrir toute cette face 3 rectangulaire avec une certaine densité. Les dimensions extérieures de cette "matrice" de ventouses 4 sont choisies de manière à permettre le prélèvement de pièces souples prédéfinies, le contour de ces pièces devant s'inscrire à l'intérieur du périmètre de la face inférieure 3 du caisson 1.

A titre d'exemple, on peut prévoir 27 ventouses dans le sens longitudinal, et 21 ventouses dans le sens transversal, distantes les unes des autres de 15 mm. Le préhenseur P comprend dans ce cas un total de 567 ventouses, et il possède un encombrement global de 420 x 330 mm environ. Une telle définition s'applique notamment à un préhenseur capable de prélever toutes pièces en cuir intervenant dans la fabrication des chaussures, y compris les plus grandes pièces telles que les empeignes.

L'intérieur du caisson 1 est prévu pour être mis sous vide, au moins partiel, au moyen d'une tuyauterie pneumatique 5 reliée à une source de vide ou de dépression non représentée. A chaque ventouse 4 est associée une électrovanne miniaturisée 6, prévue pour mettre individuellement cette ventouse 4 en communication avec le vide ou la dépression régnant dans le caisson 1, la figure 2 indiquant les électrovannes 6 associées à deux ventouses 4 adjacentes.

Chaque électrovanne 6 est disposée, à l'intérieur du caisson 1, directement au-dessus de la ventouse 4 correspondante. Les électrovannes 6 doivent donc posséder un faible encombrement, compatible avec le pas des ventouses 4 dont la valeur est par exemple de 15 mm comme indiqué plus haut, ce qui justifie l'expression "électrovanne miniaturisée".

Chaque électrovanne 6 comprend, comme le montre la figure 2, un corps 7 inséré dans une ouverture de la face inférieure 3 du caisson 1. Le corps 7 est percé d'un canal vertical 8, par exemple excentré, dont la partie inférieure forme un raccord 9 sur lequel s'adapte directement la ventouse 4. Un passage 10, ménagé dans le corps 7 entre le canal 8 et la surface latérale de ce corps, comporte un siège annulaire 11 pour un clapet 12 en forme de rondelle métallique ferro-magnétique horizontale, au-dessus duquel est disposé un électro-aimant 13. Un capot 14 ferme le corps 7 de l'électrovanne 6 à sa partie supérieure, en recouvrant l'électro-aimant 13, la paroi latérale du capot 14 présentant au moins une ouverture 15 située en correspondance avec le débouché du passage 10 sur le côté du corps 7. L'électro-aimant 13 est alimenté en énergie électrique par l'intermédiaire d'un connecteur individuel 16. Lorsque cet électro-aimant 13 est excité, il attire le clapet 12 qui, soulevé au-dessus de son siège 11, libère le passage 10 comme montré sur la partie droite de la figure 2 : l'air est alors aspiré par la ventouse 4, et au travers du canal 8 et du passage 10. Lorsque l'électro-aimant 13 n'est pas alimenté, le clapet 12 qui n'est plus attiré repose sur le siège 11, où il est maintenu d'une part par son propre poids, et d'autre part par la force d'attraction due au vide ou à la dépression qui règne à l'intérieur du caisson 1 - voir la partie gauche de la figure 2.

Juste avant l'activation d'une électrovanne 6, qui doit permettre de faire le vide au niveau de la ventouse 4 correspondante, le caisson 1 peut être mis temporairement à la pression atmosphérique, ce qui annule la force de maintien du clapet 12 sur le siège 11 par le vide. Pour appeler ce clapet 12, l'électro-aimant 13 n'aura alors plus à vaincre que la seule force de gravité. Cette solution permet de réduire sensiblement la puissance de l'électro-aimant 13, donc son encombrement et sa masse, et par conséquent le poids de l'ensemble ainsi que la puissance électrique consommée ; la quantité de chaleur produite est également réduite, ce qui limite les risques d'une élévation de température qui pourrait être nuisible au bon fonctionnement des circuits électroniques.

Chaque ventouse 4 forme, avec l'électrovanne 6 associée, un bloc amovible et facilement interchangeable, qui peut être fixé à la face inférieure 3 du caisson 1, en forme de plaque perforée, par des moyens mécaniques simples telle qu'une bride 17 assurant un assemblage étanche par l'intermédiaire d'un joint 18. Toujours en vue de permettre le démontage rapide des électrovannes 6, les connecteurs électriques 16 sont d'un type débrochable.

Ces connecteurs 16 relient les électrovannes 6 à des circuits électroniques, également logés à l'intérieur du caisson 1 et montrés sur la figure 2 dans deux exécutions possibles.

Il est prévu dans tous les cas, au-dessus de l'ensemble des électrovannes 6, un ensemble électronique de puissance 19 qui comprend des circuits imprimés 20 supportant des composants électroniques divers 21, 22, montés sur les faces supérieure et/ou inférieure des circuits imprimées 20 ; les circuits et composants de puissance se répètent ici, à l'identique, en même nombre que les ventouses 4 et les électrovannes 6 et avec une disposition correspondante. Les connecteurs 16, disposés sous la face inférieure des circuits imprimés 20, relient ainsi individuellement chaque électrovanne 6 aux éléments correspondants de l'ensemble électronique de puissance 19.

Dans l'exécution la plus simple du préhenseur P, et comme montré sur la partie gauche de la figure 2, l'ensemble électronique de puissance 19 est la seule partie électronique prenant place à l'intérieur du caisson 1.

Dans une autre exécution, illustrée par la partie supérieure droite de la figure 2, d'autres circuits électroniques 23 sont encore prévus à l'intérieur du caisson 1, au-dessus de l'ensemble électronique de puissance 19, pour le contrôle du fonctionnement du préhenseur P. Les circuits 23 comprennent une carte électronique de multiplexage 24, supportant elle-même des composants électroniques divers 25, des liaisons électriques (non représentées) existant entre ces circuits 23 et l'ensemble électronique de puissance 19.

Les éléments électroniques sont prévus, en ce qui concerne leurs dimensions et leur montage, de manière à ne pas s'opposer à la mise sous vide ou sous dépression de l'ensemble du caisson 1, en ménageant notamment une libre circulation de l'air entre la partie inférieure du caisson, comportant les ventouses 4, et sa partie supérieure à laquelle aboutit la tuyauterie 5 reliant ce caisson 1 à la source de vide.

Quels que soient leurs détails, les éléments électroniques logés dans le caisson 1 du préhenseur P sont reliés à des éléments extérieurs d'alimentation électrique, ainsi qu'à une unité de contrôle, par l'intermédiaire d'un câble multiconducteur 26, indiqué partiellement sur la figure 1. L'unité de contrôle extérieure peut être, notamment, un micro-ordinateur. Il est à noter, toutefois, que le caisson 1 peut recevoir encore un microprocesseur et l'électronique correspondante, pour "décentraliser" certaines fonctions telles que le multiplexage, en libérant ainsi l'unité central extérieure de ces fonctions.

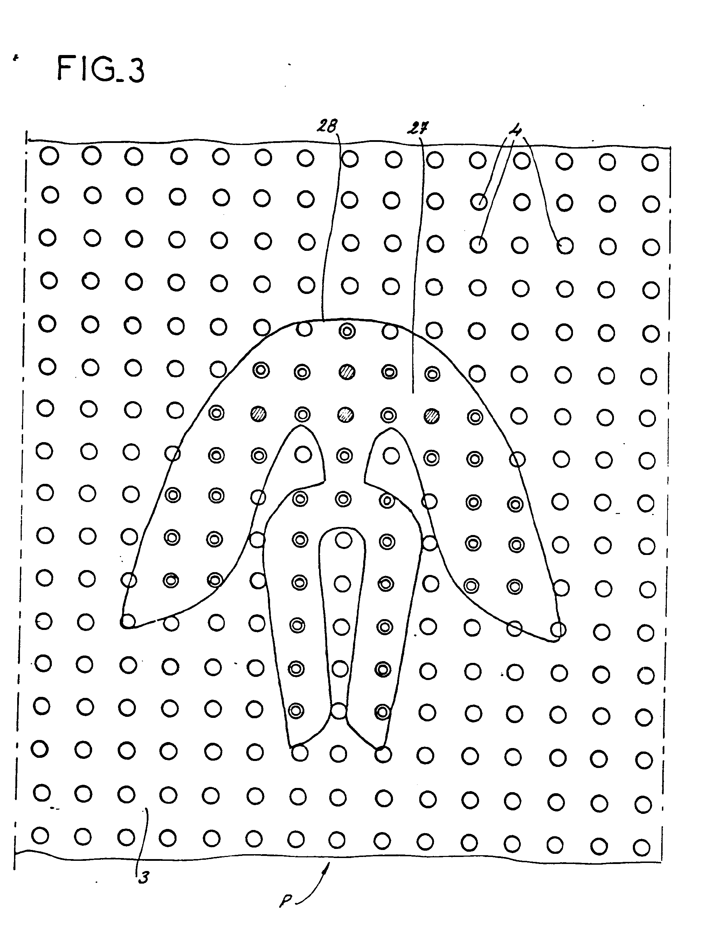

Dans tous les cas, le préhenseur P est prévu pour prélever, manipuler et déposer des pièces souples de formes et dimensions variables, par ses ventouses 4. Selon un aspect fondamental de l'invention, la préhension s'effectue en activant de façon simultanée non pas la totalité des ventouses 4, mais seulement un certain nombre de ventouses 4 sélectionnées précisément en fonction du contour de la pièce souple à prélever 27, comme l'illustre la figure 3.

Cette figure montre le quadrillage formé par les ventouses 4, ainsi que le contour 28 de la pièce souple 27, positionnée au centre de la "matrice" des ventouses. La préhension de la pièce 27 s'effectue en activant les ventouses 4 (distinguées par un double cercle) qui sont situées au voisinage immédiat du contour 28 de ladite pièce, et à l'intérieur de ce contour 28. Les ventouses situées sur l'étendue de la pièce 27, mais non en bordure de celle-ci (ventouses distinguées par des hachures) sont seulement activées de façon facultative. Ainsi, le préhenseur peut prélever la pièce 27 considérée, en s'adaptant aux caractéristiques géométriques particulières de cette pièce. Compte tenu des applications pratiques du dispositif, il est important de noter que le mode de sélection des ventouses 4 activées permet au préhenseur de saisir une pièce 27, reposant à plat sur une surface plane, sans déplacer d'éventuelles autres pièces reposant à plat sur la même surface dans des positions adjacentes. Bien entendu, le préhenseur peut aussi saisir une pièce isolée.

La préhension d'une pièce 27 s'opère de la manière suivante, en supposant que le préhenseur P se trouve initialement dans une position d'attente où le caisson 1 est éloigné de la pièce 27 et mis à la pression atmosphérique, tandis que les électrovannes 6 associées aux ventouses 4 sont toutes fermées :

- On commande d'abord l'ouverture des seules électrovannes 6 associées aux ventouses 4 devant participer à la préhension de la pièce 27. Cette ouverture s'effectue à la pression atmosphérique, donc ne crée encore aucun effet d'aspiration au niveau des ventouses 4.

- Le caisson 1 est mis sous vide, par l'intermédiaire de la tuyauterie 2, ce qui crée une dépression au niveau des ventouses 4 sélectionnées, et assure l'étanchéité des électrovannes 6 non activées.

- Le bras manipulateur, ou autre robot déplace le préhenseur P vers la pièce à prélever. Les deux opérations précédentes peuvent être exécutées en "temps masqué", pendant ce déplacement, pour accroître la rapidité du cycle de fonctionnement.

- Le caisson 1 étant amené sur la pièce 27 à prélever, dans la position relative prévue, cette pièce 27 est prélevée au moyen des ventouses 4 activées, de la manière illustrée par la figure 3.

- Le bras manipulateur, ou autre robot, est déplacé de nouveau pour transférer la pièce 27 prélevée vers un lieu de dépose.

- La pièce 27 est lâchée, au lieu de dépose, en désactivant les ventouses 4 qui la retenaient par fermeture des électrovannes 6 associées à ces ventouses, et par obturation de la tuyauterie pneumatique 5 reliant le caisson 1 à la source de vide ou de dépression. Un lâcher correct de la pièce est favorisé par une courte phase de soufflage d'air comprimé, remplaçant momentanément le vide ou la dépression dans le caisson 1. La pièce peut ainsi être déposée en décrivant une chute libre à plat, sur une certaine hauteur.

- Le caisson 1 est remis à la pression atmosphérique.

- En dernier lieu, ou simultanément à l'opération précédemment indiquée, le préhenseur P est ramené vers sa position d'attente, à moins qu'il ne soit immédiatement amené vers une nouvelle pièce souple à prélever dont les caractéristiques dimensionnelles et la position sont, dans le cas le plus général, distinctes de celle de la pièce précédemment manipulée.

La sélection des ventouses 4 à activer, en fonction des caractéristiques de la pièce 27 à prélever, est effectuée par la partie électronique et notamment dans l'unité centrale, à partir d'informations relatives à la forme de la pièce et d'autres données, et à l'aide d'un logiciel spécialement adapté. Le logiciel détermine ainsi l'ensemble des ventouses 4 susceptibles de prélever une pièce 27 à partir des données de digitalisation de la pièce, elles-mêmes obtenues par divers moyens tels que conception assistée par ordinateur ou calcul ou encore apprentissage, et aussi en fonction d'un positionnement et d'une orientation choisis relativement au préhenseur (par exemple : positionnement du centre de gravité de la pièce au centre du préhenseur, orientation de l'axe principal d'inertie de la pièce suivant l'axe médian longitudinal ou transversal du préhenseur). Le logiciel optimise en outre le nombre des ventouses activées, en fonction de critères liés à la forme, au poids, à la rigidité, etc de la pièce, différentes possibilités de sélection des ventouses pour une pièce donnée étant déjà décrites plus haut en référence à la figure 3. Cette optimisation vise à limiter le nombre de ventouses 4 activées, donc à réduire la puissance nécessaire au niveau des moyens de mise sous vide du caisson 1, tout en garantissant la préhension de la pièce par ces ventouses, et sa retenue au cours de la manipulation.

Les informations correspondant à la sélection des ventouses activées pour une pièce donnée sont avantageusement mémorisées, s'il s'agit d'une pièce de fabrication courante, pour être appelées au moment où une telle pièce doit être manipulée. Ces informations peuvent aussi être directement transmises au préhenseur, sans mémorisation, s'il s'agit d'une pièce qui n'est pas de série de d'une installation équipée pour travailler en "temps réel".

Le dispositif objet de la présente invention est applicable notamment au triage automatique de pièces en cuir dans des industries telles que celle de la chaussure, où les différences de dimensions entre pointures voire demi-pointures consécutives sont faibles et parfois difficilement décelables par l'oeil d'un opérateur. L'application du dispositif à ce genre d'industries met aussi à profit le fait que, lors de la conception des produits, que celle-ci soit assistée par ordinateur ou faite après patronage manuel, les caractéristiques géométriques des pièces unitaires (dimensions, contours, centres de gravité, axes d'inertie, etc) peuvent être calculées, digitalisées et mises en mémoire, en étant ainsi prêtes à être exploitées à tout moment.

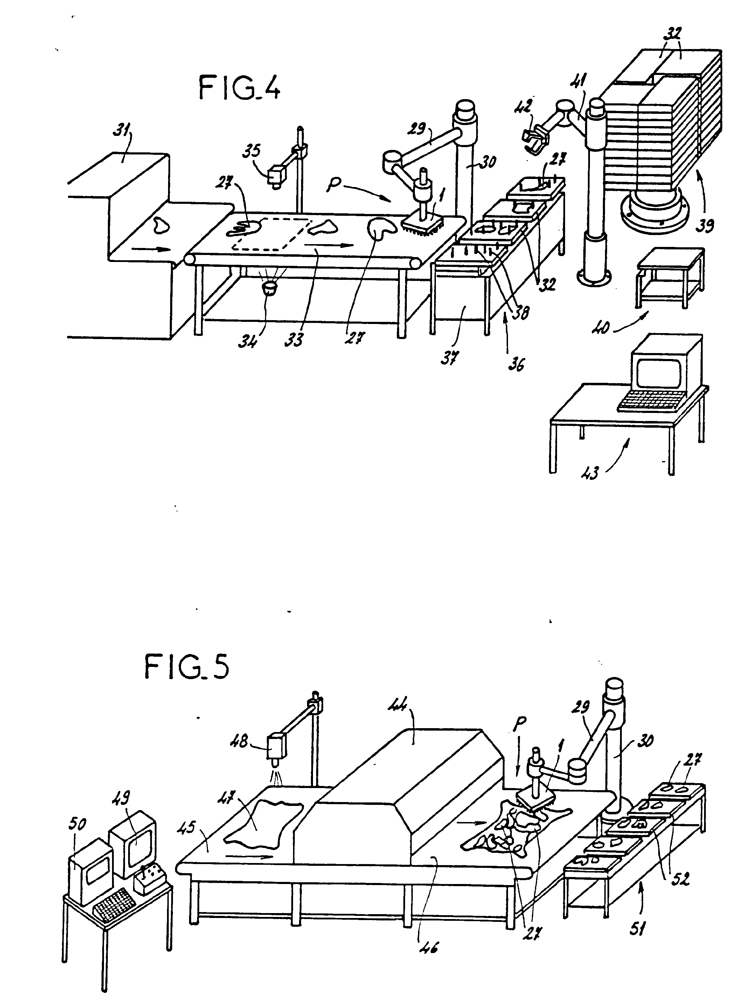

Les figures 4 et 5 illustrent deux applications particulières entrant dans le cadre général qui vient d'être indiqué, avec utilisation dans chaque cas d'un préhenseur P tel que décrit plus haut, dont le caisson 1 est porté par un bras manipulateur ou par un autre robot 29, lui-même monté sur un support 30 implanté sur le côté d'une installation traitant des pièces en cuir 27.

La figure 4 montre une installation de triage et d'empilage de pièces en cuir 27, prévue dans une chaîne de fabrication par exemple à la sortie d'une machine de finissage 31, ou encore à la sortie de toute autre machine réalisant une opération intermédiaire, après exécution de laquelle les pièces travaillées doivent être ramassées et regroupées. Le triage consiste ici à empiler des pièces 27 de caractéristiques prédéterminées sur des palettes 32, équipées en conséquence pour positionner ces pièces.

L'installation comprend, à la sortie de la machine de finissage 31, un tapis transporteur translucide 33, entraîné par des moyens moteurs non représentés, sur lequel les pièces en cuir 27 parviennent et avancent, après leur passage à travers la machine 31. Au tapis transporteur translucide 33 est associé un système de reconnaissance opto-électronique, comprenant d'une part une source lumineuse 34 disposée sous le tapis transporteur 33 et dirigée vers le haut, et d'autre part une caméra 35 de type CCD, située au-dessus du tapis transporteur 33 et de la source lumineuse 34. La caméra 35 "photographie" les pièces 27 lors de leur passage sur le tapis transporteur 33 ; cette caméra est liée à des moyens de traitement électroniques qui, à l'aide d'un logiciel approprié, déterminent les caractéristiques géométriques spécifiques de chaque pièce 27 (surface, rayons de courbure minimum et maximum, axes d'inertie, centre de gravité, etc), et comparent ces caractéristiques avec celles des pièces stockées en mémoire, pour identifier avec précision la pièce concernée, et notamment, pour l'industrie de la chaussure : le type, la pointure et même la demi-pointure, le pied droit ou gauche.

La pièce 27 considérée est ensuite prélevée sur le tapis transporteur 33, au moyen de l'ensemble formé par le préhenseur P proprement dit et par le bras manipulateur ou robot 29. Cet ensemble est commandé à partir d'un certain nombre d'informations : en particulier, le bras manipulateur ou robot 29 est déplacé en fonction de la position de la pièce 27 au moment de la "prise de vue" par la caméra 35, de la vitesse du tapis transporteur 33 et du temps écoulé, pour positionner exactement le préhenseur P au-dessus de la pièce 27, tandis que les ventouses nécessaires au prélèvement de cette pièce sont activées en fonction du type de pièce identifié. Toute pièce 27 préalablement reconnue peut être ainsi prélevée par le préhenseur, au cours de son avance sur le tapis transporteur 33.

Le préhenseur P, déplacé par le bras manipulateur ou robot 29, transfère la pièce 27 prélevée jusqu'à un poste d'empilage 36, qui comporte une table 37 supportant plusieurs palettes 32 disposées côte à côte. Chaque palette 32 est prévue pour recevoir des pièces 27 d'un type déterminé, notamment des pièces en cuir constitutives d'une tige de chaussure, les pièces 27 identiques s'empilant à plat sur les palettes 32 correspondantes. Pour positionner les pièces 27 sur les palettes 32, on prévoit sur ces palettes 32 des plots ou piges amovibles 38, qui servent à la fois de guides d'empilage et d'organes de maintien des pièces 27 pendant les transferts. Dans chaque palette 32 sont percés des trous régulièrement répartis selon une trame prédéfinie, et aptes à recevoir les plots ou piges 38, disposés sur cette palette 32 en tenant compte du contour des pièces 27 devant y être empilées.

Pour la manutention et la préparation des palettes 32, l'installation de triage et d'empilage représentée sur la figure 4 comprend encore un magasin 39 de stockage des palettes 32, un poste de préparation 40 où les plots ou piges 38 sont mis en place sur les palettes 32, et un bras manipulateur ou autre robot 41, pourvu d'une pince 42 capable de saisir une palette 32, notamment pour alimenter le poste d'empilage 36. Enfin, cette installation possède un poste de commande et de contrôle 43, pouvant inclure une unité centrale de traitement qui pilote tous les dispositifs précédemment mentionnés.

La figure 5 montre une installation de découpe automatique de pièces en cuir 27, également prévue dans une chaîne de fabrication de chaussures. L'installation comporte, en amont de la machine de découpe 44 proprement dite, une zone de placement 45, tandis qu'une table de déchargement 46 est prévue à la suite de la machine de découpe 44.

La zone de placement 45 reçoit une peau 47 à découper. Le placement des pièces à découper dans la peau 47 est réalisé de façon interactive par un opérateur, à l'aide d'une caméra 48, d'un écran graphique 49 et d'un ordinateur 50. Ces moyens de placement fournissent des informations concernant ce placement, qui sont mémorisées dans l'ordinateur 50.

Après transfert de la peau 47 dans la machine de découpe 44, ces informations mémorisées sont exploitées pour commander automatiquement le chariot porte-outil de la machine 44. Celle-ci effectue ainsi la découpe automatique de la peau 47 par un moyen connu tel que jet d'eau, laser ou couteau vibrant.

La peau 47, dans laquelle les pièces 27 ont été découpées selon le placement choisi, est ensuite transférée vers la table de déchargement 46, sur le côté de laquelle est installé le bras manipulateur ou robot 29, qui supporte et déplace le préhenseur P.

Les mêmes informations mémorisées, traduisant les caractéristiques et le placement des pièces 27, sont alors transmises au bras manipulateur ou robot 29 pour piloter les mouvements du préhenseur P, et pour activer les ventouses de ce dernier. Les pièces 27 sont ainsi transférées vers un poste de triage 51, où elles sont déposées avec précision sur des palettes 52, à des emplacements réservés qui correspondent aux divers types de pièces 27 découpées.

Comme il va de soi, l'invention ne se limite pas à la seule forme d'exécution et aux seules utilisations de ce dispositif pour la préhension, la manipulation et la dépose de pièces souples qui ont été décrites ci-dessus, à titre d'exemples ; elle en embrasse, au contraire, toutes les variantes de réalisation et d'application respectant le même principe, quels qu'en soient notamment les détails constructifs, tels que ceux relatifs aux électrovannes associées aux ventouses du préhenseur. Ainsi, la position excentrée du canal 8 de ces électrovannes 6 reste facultative, et par ailleurs certains composants électroniques peuvent être reportés sur lesdites électrovannes. Le robot qui supporte et déplace le préhenseur peut être de tout type, une disposition "suspendue" utilisant un robot manipulateur sur portique pouvant s'avérer avantageuse dans certaines applications.

## Revendications

1. Dispositif pour la préhension de pièces souples isolées ou adjacentes, leur manipulation et leur dépose, notamment de pièces en cuir et similaires, comprenant un préhenseur (P) équipé d'une multiplicité de ventouses (4) réparties dans un plan et supportées par une structure (1,3), les ventouses (4) étant aptes à être reliées individuellement à une source de vide ou de dépression, et des moyens du genre vanne (6) étant prévus pour contrôler séparément l'activation de chaque ventouse (4) en la mettant en communication individuellement avec une source de vide ou de dépression, de telle manière qu'une sélection des ventouses (4) activées puisse être effectuée en fonction du contour particulier (28) de chaque pièce (27), à prélever, caractérisé en ce qu'à chaque ventouse (4) est associée, en tant que moyen de contrôle de son activation, une électrovanne (6) qui est propre à cette ventouse (4) et qui est commandée par une partie électronique (19 à 25), et à l'aide d'un logiciel, à partir d'informations mémorisées ou directement transmises relatives à la forme et/ou à d'autres caractéristiques, telles que position, orientation, poids, rigidité, de chaque pièce (27) à prélever, sans nécessité de contact physique avec cette pièce (27).

2. Dispositif pour la préhension, la manipulation et la dépose de pièces souples, selon la revendication 1, caractérisé en ce que les ventouses (4) sont supportées par la face inférieure (3) d'un caisson rigide et étanche (1), porté par un bras manipulateur ou autre robot (29) auquel il est lié par un raccord mécanique (2), l'intérieur du caisson (1) étant relié par une tuyauterie pneumatique (5) à une source de vide ou de dépression extérieure.

3. Dispositif pour la préhension, la manipulation et la dépose de pièces souples, selon la revendication 2, caractérisé en ce que les ventouses (4) sont disposées côte à côte dans la partie inférieure du caisson (1) selon une répartition géométrique simple, notamment une répartition suivant un quadrillage régulier.

4. Dispositif pour la préhension, la manipulation et la dépose de pièces souples, selon la revendication 2 ou 3, caractérisé en ce que chaque électrovanne, associée à une ventouse (4), est une électrovanne miniaturisée (6) prévue pour mettre cette ventouse (4) en communication individuellement avec le vide ou la dépression régnant dans le caisson (1).

5. Dispositif pour la préhension, la manipulation et la dépose de pièces souples, selon la revendication 4, caractérisé en ce que l'ensemble des électrovannes (6) affectées aux ventouses (4) est logé dans le caisson (1), directement au-dessus de ces ventouses (4).

6. Dispositif pour la préhension, la manipulation et la dépose de pièces souples, selon la revendication 5, caractérisé en ce que chaque électrovanne (6) est disposée, à l'intérieur du caisson (1), directement au-dessus de la ventouse (4) correspondante.

7. Dispositif pour la préhension, la manipulation et la dépose de pièces souples, selon la revendication 6, caractérisé en ce que chaque ventouse (4) forme, avec l'électrovanne (6) associée, un bloc amovible et interchangeable fixé à la face inférieure (3) du caisson (1) par des moyens mécaniques (17) et avec étanchéité (18).

8. Dispositif pour la préhension, la manipulation et la dépose de pièces souples, selon l'une quelconque des revendications 4 à 7, caractérisé en ce que chaque électrovanne (6) associée à une ventouse (4) comporte un siège annulaire (11) pour un clapet (12) au-dessus duquel est disposé un électro-aimant (13), l'excitation de l'électro-aimant (13) attirant le clapet en le soulevant au-dessus du siège (11), pour permettre l'aspiration d'air par la ventouse (4), tandis que, lorsque l'électro-aimant (13) n'est pas alimenté, le clapet (12) repose sur le siège (11) où il est maintenu d'une part par son propre poids, et d'autre part par la force d'attraction due au vide ou à la dépression qui règne à l'intérieur du caisson (1).

9. Dispositif pour la préhension, la manipulation et la dépose de pièces souples, selon la revendication 8, caractérisé en ce que le caisson (1) et prévu pour être mis temporairement à la pression atmosphérique, pour annuler la force de maintien du clapet (12) sur le siège (11) par le vide ou la dépression.

10. Dispositif pour la préhension, la manipulation et la dépose de pièces souples, selon la revendication 8 ou 9, caractérisé en ce que chaque électrovanne (6) comprend un corps (7) avec un passage (10) comportant le siège annulaire (11) pour le clapet (12), et un canal vertical (8), dont la partie inférieure forme un raccord (9) sur lequel s'adapte directement la ventouse (4) correspondante.

11. Dispositif pour la préhension, la manipulation et la dépose de pièces souples, selon l'une quelconque des revendications 2 à 10, caractérisé en ce qu'il comprend des circuits électroniques de commande et de contrôle (19 à 25), permettant d'activer de façon individuelle chaque électrovanne (6) associée à une ventouse (4), sont logés à l'intérieur du caisson (1).

12. Dispositif pour la préhension, la manipulation et la dépose de pièces souples, selon la revendication 11, caractérisé en ce que lesdits circuits électroniques (19 à 25) sont raccordés d'une part aux électrovannes (6), par l'intermédiaire de connecteurs individuels (16), et d'autre part, par l'intermédiaire d'un câble multiconducteurs (26), à une unité de contrôle extérieure, la commande d'activation des électrovannes (6) étant multiplexée.

13. Dispositif pour la préhension, la manipulation et la dépose de pièces souples, selon l'une quelconque des revendications 1 à 12, caractérisé en ce que la sélection des ventouses (4) activées est faite en activant la totalité des ventouses (4) situées sur l'étendue de la pièce (27) à prélever.

14. Dispositif pour la préhension, la manipulation et la dépose de pièces souples, selon l'une quelconque des revendications 1 à 12, caractérisé en ce que la sélection des ventouses (4) activées est faite en activant seulement les ventouses (4) voisines du contour (28) de la pièce (27) à prélever et situées à l'intérieur de ce contour (28).

15. Dispositif pour la préhension, la manipulation et la dépose de pièces souples, selon l'une quelconque des revendications 1 à 14, caractérisé en ce que le préhenseur (P) est en outre prévu pour effectuer au travers des ventouses (4) un soufflage d'air au moment de la dépose d'une pièce (27).

16. Dispositif pour la préhension, la manipulation et la dépose de pièces souples, selon l'une quelconque des revendications 1 à 15, caractérisé par son application au triage automatique de pièces en cuir et similaires (27), dans l'industrie de la chaussure et dans les industries voisines, et notamment au ramassage et au triage de telles pièces (27) à la sortie d'une machine de finissage (31), d'une machine réalisant une opération intermédiaire, ou d'une machine de découpe automatique (44).

17. Dispositif pour la préhension, la manipulation et la dépose de pièces souples, selon la revendication 16, caractérisé en ce qu'il est appliqué au triage automatique de pièces en cuir ou similaires (27), par empilage de ces pièces (27) sur des palettes (32,52) équipées de moyens, notamment de plots ou de piges (38) prévus pour positionner ces pièces empilées.

18. Dispositif pour la préhension, la manipulation et la dépose de pièces souples, selon la revendication 16 ou 17, caractérisé en ce qu'il est utilisé en association avec un système de reconnaissance opto-électronique (34,35) tel qu'à caméra, identifiant les pièces (27) à prélever.

19. Dispositif pour la préhension, la manipulation et la dépose de pièces souples, selon la revendication 16 ou 17, caractérisé en ce qu'il est utilisé en association avec des moyens (48,49,50) de placement des pièces (27) à prélever, notamment des moyens réalisant le placement de pièces en cuir (27) à découper dans une peau (47), ces moyens fournissant des informations qui sont mémorisées et transmises au préhenseur (P).

**Patentansprüche**

1. Vorrichtung zum Ergreifen von einzelnen oder benachbarten flexiblen Werkstücken, deren Handhabung und deren belegen, insbesondere von Werkstücken aus Leder oder dergleichen, mit einem Greifer (P), der mit einer Vielzahl an in einer Ebene verteilten und von einem Tragwerk (1, 3) getragenen Saugnäpfen (4) versehen ist, wobei die Saugnäpfe (4) jeweils einzeln mit einer Vakuum- oder Unterdruckquelle verbindbar sind, und wobei ventilartige Mittel (6) zum getrennten Steuern der Aktivierung eines jeden Saugnapfes (4) vorgesehen sind, um diese jeweils einzeln mit einer Vakuum- oder Unterdruckquelle in Verbindung zu bringen, und zwar derart, daß in Abhängigkeit der besonderen kontur (28) eines jeden zu entnehmenden Werkstückes (27) eine Auswahl an aktivierten Saugnäpfen (4) erfolgt, dadurch gekennzeichnet, daß jedem Saugnapf (4), als Steuermittel für seine Aktivierung, ein Elektroventil (6) zugehörig ist, das für diesen Saugnapf (4) geeignet ist und das durch eine Elektronik (19 - 25) und ferner unter Zuhilfenahme einer Logik, ausgehend von gespeicherten oder direkt übermittelten Daten bezüglich der Form und/oder anderer Charakteristika, wie Lage, Ausrichtung, Gewicht, Steifigkeit jedes zu entnehmenden Werkstückes (27) gesteuert wird, wobei eine körperliche Berührung mit diesem Werkstück (27) nicht notwendig ist.

2. Vorrichtung zum Ergreifen, zur Handhabung und zum Ablegen von flexiblen Werkstücken nach Anspruch 1, dadurch gekennzeichnet, daß die Saugnäpfe (4) durch die untere Seite (3) eines steifen und luftundurchlässigen Gehäuses (1) getragen werden, das wiederum von einem Manipulator-Arm oder andersartigem Roboter (29) getragen wird, mit dem es über ein mechanisches Verbindungsstück (2) verbunden ist, wobei der Innenraum des Gehäuses (1) über eine pneumatische Rohrleitung (5) mit einer außenliegenden Vakuum- oder Unterdruckquelle verbunden ist.

3. Vorrichtung zum Ergreifen, zur Handhabung und zum Ablegen von flexiblen Werkstücken nach Anspruch 2, dadurch gekennzeichnet, daß die Saugnäpfe (4) nebeneinander im unteren Bereich des Gehäuses (1) in einer einfachen geometrischen Verteilung, insbesondere in einem regelmäßigen Gittermuster verteilt, angeordnet sind.

4. Vorrichtung zum Ergreifen, zur Handhabung und zum Ablegen von flexiblen Werkstücken nach Anspruch 2 oder 3, dadurch gekennzeichnet, daß jedes Elektroventil, das einem Saugnapf (4) zugehörig ist, ein miniaturisiertes Elektroventil (6) ist, das dazu vorgesehen ist, jeden Saugnapf einzeln mit dem im Inneren des Gehäuses herrschenden Vakuum oder Unterdruck in Verbindung zu setzen.

5. Vorrichtung zum Ergreifen, zur Handhabung und zum Ablegen von flexiblen Werkstücken nach Anspruch 4, dadurch gekennzeichnet, daß der Zusammenbau an den Saugnäpfen (4) zugehörigen Elektroventilen (6) im Gehäuse (1) direkt oberhalb der Saugnäpfe (4) zum Liegen kommt.

6. Vorrichtung zum Ergreifen, zur Handhabung und zum Ablegen von flexiblen Werkstücken nach Anspruch 5, dadurch gekennzeichnet, daß jedes Elektroventil (6) im Inneren des Gehäuses (1) direkt oberhalb des entsprechenden Saugnapfes (4) angeordnet ist.

7. Vorrichtung zum Ergreifen, zur Handhabung und zum Ablegen von flexiblen Werkstücken nach Anspruch 6, dadurch gekennzeichnet, daß jeder Saugnapf (4) mit dem zugehörigen Elektroventil (6) einen abnehmbaren und austauschbaren Block bildet, der über mechanische Mittel (17) und unter Dichtigkeit an der unteren Seite (3) des Gehäuses (1) befestigt ist.

8. Vorrichtung zum Ergreifen, zur Handhabung und zum Ablegen von flexiblen Werkstücken nach einem der Ansprüche 4 - 7, dadurch gekennzeichnet, daß jedes, einem Saugnapf (4) zugehöriges Elektroventil (6) einen ringförmigen Sitz (11) für eine Ventilklappe (12) aufweist, oberhalb derer ein Elektromagnet (13) angeordnet ist, wobei durch Erregen des Elektromagnetes (13) die Ventilklappe angezogen wird, indem diese über den Sitz (11) angehoben wird, so daß Luft durch den Saugnapf (4) gezogen werden kann, wohingegen, falls der Elektromagnet (13) nicht mehr versorgt wird, die Ventilklappe (12) auf dem Sitz (11) ruht, wo sie einerseits durch ihr geeignetes Gewicht gehalten wird und andererseits aufgrund der Saugkraft des Vakuums oder des Unterdruckes, der im Inneren des Gehäuses (1) herrscht.

9. Vorrichtung zum Ergreifen, zur Handhabung und zum Ablegen von flexiblen Werkstücken nach Anspruch 8, dadurch gekennzeichnet, daß es vorgesehen ist, das Gehäuse (1) zeitweilig dem atmosphärischen Druck auszusetzen, um die durch das Vakuum oder den Unterdruck verursachte Haltekraft der Ventilklappe (12) auf dem Sitz (11) aufzuheben.

10. Vorrichtung zum Ergreifen, zur Handhabung und zum Ablegen von flexiblen Werkstücken nach Anspruch 8 oder 9, dadurch gekennzeichnet, daß jedes Elektroventil (6) einen Körper (7) mit einem Durchtritt (10) enthält, der den ringförmigen Sitz (11) für die Ventilklappe (12) aufweist, und der ferner einen vertikal verlaufenden Kanal (S) aufweist, dessen unterer Abschnitt ein Verbindungsstück (9) bildet, auf dem direkt passend der entsprechende Saugnapf (4) aufnehmbar ist.

11. Vorrichtung zum Ergreifen, zur Handhabung und zum Ablegen von flexiblen Werkstücken nach einem der Ansprüche 2 - 10, dadurch gekennzeichnet, daß die elektronischen Steuer- und Regelkreise (19 - 25), die eine individuelle Betätigung des einem Saugnapf (4) zugehörigen Elektroventils (6) ermöglichen, im Innenraum des Gehäuses (1) angeordnet sind.

12. Vorrichtung zum Ergreifen, zur Handhabung und zum Ablegen von flexiblen Werkstücken nach Anspruch 11, dadurch gekennzeichnet, daß die elektronischen kreise (19 - 25) einerseits mit den Elektroventilen (6) über individuelle Verbinder (16) und andererseits über ein mehradriges Kabel (26) mit einer außenliegenden Steuereinheit verbunden sind, wobei die Steuerung der Betätigung der Elektroventile (6) im Multiplex-Betrieb läuft.

13. Vorrichtung zum Ergreifen, zur Handhabung und zum Ablegen von flexiblen Werkstücken nach einem der Ansprüche 1 - 12, dadurch gekennzeichnet, daß die Auswahl der aktivierten Saugnäpfe (4) so getroffen wird, daß all diejenigen der Saugnäpfe (4) aktiviert werden, die im Erstreckungsbereich des zu entnehmenden Werkstückes (47) angeordnet sind.

14. Vorrichtung zum Ergreifen, zur Handhabung und zum Ablegen von flexiblen Werkstücken nach einem der Ansprüche 1 - 12, dadurch gekennzeichnet, daß die Auswahl der aktivierten Saugnäpfe (4) so getroffen wird, daß lediglich solche Saugnäpfe (4) ausgewählt werden, die benachbart zur kontur (28) des zu entnehmenden Werkstückes (28) liegen und die innerhalb dieser kontur (28) angeordnet sind.

15. Vorrichtung zum Ergreifen, zur Handhabung und zum Ablegen von flexiblen Werkstücken nach einem der Ansprüche 1 - 14, dadurch gekennzeichnet, daß der Greifer (P) darüberhinaus dazu vorgesehen ist, über die Saugnäpfe ein Blasen von Luft zum Zeitpunkt des Ablegens der Werkstücke (27) zu bewirken.

16. Vorrichtung zum Ergreifen, zur Handhabung und zum Ablegen von flexiblen Werkstücken nach einem der Ansprüche 1 - 15, gekennzeichnet durch seine Anwendung zur automatischen Sortierung von Werkstücken (27) aus Leder oder dergleichen auf dem Gebiet der Schuhindustrie und in benachbarten Industrien, und insbesondere zum Sammeln und Sortieren derartiger Werkstücke (27) am Ausgang einer Endbearbeitungsmaschine (31), einer Maschine, die Zwischenschritte durchführt, oder einer automatischen Schneidemaschine (44).

17. Vorrichtung zum Ergreifen, zur Handhabung und zum Ablegen von flexiblen Werkstücken nach Anspruch 16, dadurch gekennzeichnet, daß sie zum automatischen Sortieren von Werkstücken (27) aus Leder oder dergleichem verwendet wird, indem diese Werkstücke (27) auf Paletten (32, 52) aufgestapelt werden, die mit Mitteln zum Positionieren dieser aufgestapelten Werkstücke versehen sind, insbesondere mit Steckstellen oder Maßpeilern (38).

18. Vorrichtung zum Ergreifen, zur Handhabung und zum Ablegen von flexiblen Werkstücken nach einem der Ansprüche 16 oder 17, dadurch gekennzeichnet, daß sie in Zusammenhang mit einem opto-elektronischen Erkennungssystem (34, 35) wie beispielsweise eine Kamera, die die zu entnehmenden Werkstücke (27) identifiziert, zusammen verwendet wird.

19. Vorrichtung zum Ergreifen, zur Handhabung und zum Ablegen von flexiblen Werkstücken nach Anspruch 16 oder 17, dadurch gekennzeichnet, daß sie in Zusammenhang mit Mitteln (48, 49, 50) zum an Ort und Stelle bringen der zu entnehmenden Werkstücke (27) verwendet wird, insbesondere mit Mitteln, die das an Ort und Stelle bringen von Werkstücken (27) aus Leder, die aus einer Haut (47) auszuschneiden sind, wobei diese Mittel Informationen liefern, die gespeichert und dem Greifer (P) übermittelt werden.

**Claims**

1. Device for gripping flexible pieces, either isolated or adjacent, manipulating them and putting them down, notably leather pieces and the like, comprising a gripper (P) equipped with a multiplicity of suckers (4) distributed in one plane and carried by a structure (1, 3), the suckers (4) being suitable for being connected individually to a source of vacuum or negative pressure, and means of the valve type (6) being provided for controlling separately the activation of each sucker (4) by putting it in communication individually with a source of vacuum or negative pressure, so that activated suckers (4) can be selected according to the particular outline (28) of each piece (27) to be picked up, characterised in that with each sucker (4) is associated, as a means of controlling its activation, a solenoid valve (6) which is peculiar to this sucker (4) and which is controlled by an electronic part (19 to 25), and by means of software, from stored or directly transmitted data relating to the shape and/or other characteristics, such as position, orientation, weight, rigidity, of each piece (27) to be picked up, without any need for physical contact with this piece (27).

2. Device for gripping, handling and putting down flexible pieces, according to Claim 1, characterised in that the suckers (4) are carried by the bottom face (3) of a rigid airtight chamber (1), carried by a manipulating arm or other robot (29) to which it is connected by a mechanical coupling (2), the inside of the chamber (1) being connected by pneumatic pipework (5) to an external source of vacuum or negative pressure.

3. Device for gripping, handling and putting down flexible pieces, according to Claim 2, characterised in that the suckers (4) are disposed side by side in the bottom part of the chamber (1) in a simple geometric distribution, notably a distribution in a regular grid.

4. Device for gripping, handling and putting down flexible pieces, according to Claim 2 or 3, characterised in that each solenoid valve associated with a sucker (4) is a miniaturised solenoid valve (6) provided for putting this sucker (4) in communication individually with the vacuum or negative pressure prevailing in the chamber (1).

5. Device for gripping, handling and putting down flexible pieces, according to Claim 4, characterised in that the set of solenoid valves (6) allocated to the suckers (4) is housed in the chamber (1), directly above these suckers (4).

6. Device for gripping, handling and putting down flexible pieces, according to Claim 5, characterised in that each solenoid valve (6) is disposed, inside the chamber (1), directly above the corresponding sucker (4).

7. Device for gripping, handling and putting down flexible pieces, according to Claim 6, characterised in that each sucker (4) forms, with the associated solenoid valve (6), a removable and interchangeable unit fixed to the bottom face (3) of the chamber (1) by mechanical means (17) and with an airtight seal (18).

8. Device for gripping, handling and putting down flexible pieces, according to any one of Claims 4 to 7, characterised in that each solenoid valve (6) associated with a sucker (4) has an annular seat (11) for a valve (12) above which an electromagnet (13) is disposed, the excitation of the electromagnet (13) attracting the valve by lifting it above the seat (11), so as to allow air to be drawn in through the sucker (4), whilst, when the electromagnet (13) is not energised, the valve (12) rests on the seat (11), where it is held on the one hand by its own weight and on the other hand by the force of the traction due to the vacuum or negative pressure prevailing inside the chamber (1).

9. Device for gripping, handling and putting down flexible pieces, according to Claim 8, characterised in that the chamber (1) is designed so as to be put temporarily at atmospheric pressure, in order to cancel out the force holding the valve (12) on the seat (11) by means of the vacuum or negative pressure.

10. Device for gripping, handling and putting down flexible pieces, according to Claim 8 or 9, characterised in that each solenoid valve (6) comprises a body (7) with a passage (10) including the annular seat (11) for the valve (12), and a vertical duct (8), the bottom part of which forms a connection (9) onto which the corresponding sucker (4) fits directly.

11. Device for gripping, handling and putting down flexible pieces, according to any one of Claims 2 to 10, characterised in that the electronic command and control circuits (19 to 25), enabling each solenoid valve (6) associated with a sucker (4) to be activated individually, are housed inside the chamber (1).

12. Device for gripping, handling and putting down flexible pieces, according to Claim 11, characterised in that the said electronic circuits (19 to 25) are connected on the one hand to the solenoid valves (6), through individual connectors (16), and on the other hand through a multiconductor cable (26) to an external control unit, the command activating the solenoid valves (6) being multiplexed.

13. Device for gripping, handling and putting down flexible pieces, according to any one of Claims 1 to 12, characterised in that the activated suckers (4) are selected by activating all the suckers (4) situated over the area of the piece (27) to be picked up.

**14.** Device for gripping, handling and putting down flexible pieces, according to any one of Claims 1 to 12, characterised in that the activated suckers (4) are selected by activating only the suckers (4) adjacent to the circumference (28) of the piece (27) to be picked up and situated within this circumference (28).

**15.** Device for gripping, handling and putting down flexible pieces, according to any one of Claims 1 to 14, characterised in that the gripper (P) is also designed so as to produce a blast of air through the suckers (4) when a piece (27) is put down.

**16.** Device for gripping, handling and putting down flexible pieces, according to any one of Claims 1 to 15, characterised by its application to the automatic sorting of leather pieces and the like (27), in the footwear industry and related industries, and particularly to the collecting and sorting of such pieces (27) at the discharge from a finishing machine (31), a machine carrying out an intermediate operation or an automatic cutting machine (44).

**17.** Device for gripping, handling and putting down flexible pieces, according to Claim 16, characterised in that it is applied to the automatic sorting of leather pieces or the like (27), by stacking these pieces (27) on pallets (32, 52) equipped with means, notably studs or rods (38), provided for positioning these stacked pieces.

**18.** Device for gripping, handling and putting down flexible pieces, according to Claim 16 or 17, characterised in that it is used in association with an optoelectronic recognition system (34, 35) such as a camera system, identifying the pieces (27) to be picked up.

**19.** Device for gripping, manipulating and putting down flexible pieces, according to Claim 16 or 17, characterised in that it is used in association with means (48, 49, 50) for positioning the pieces (27) to be picked up, notably means carrying out the positioning of leather pieces (27) to be cut from a hide (47), these means supplying data which are stored and transmitted to the gripper (P).

EP 0 348 311 B1

FIG_1

FIG_2

13

# FIG_3

# FIG_4

# FIG_5